# EUROPÄISCHE PATENTSCHRIFT

(11) **EP 1 199 903 B1**
(45) Veröffentlichungstag und Bekanntmachung des Hinweises auf die Patenterteilung: **01.06.2005**
(21) Anmeldenummer: 01120409.6
(22) Anmeldetag: 27.08.2001
(51) Int. Cl.: H04Q 7/38

(54) **Verfahren zum vom Besitzer unbemerkten Aktivieren eines Mobiltelefons**
Method for activating a mobile telephone without user interaction
Procédé d'activation d'un téléphone mobile sans intervention de l'utilisateur

(30) Priorität: 16.10.2000 DE 10051129
(43) Veröffentlichungstag der Anmeldung: 24.04.2002
(73) Patentinhaber: Rohde & Schwarz GmbH & Co. KG, 81671 München (DE)
(72) Erfinder: Frick, Joachim, 86391 Stadtbergen (DE)
(74) Vertreter: Körfer, Thomas, Dipl.-Phys.

(56) Entgegenhaltungen:
- WO-A-95/00860
- DE-A- 19 528 616
- US-A- 6 026 306
- US-A- 6 052 597
- "Digital cellular telecommunications system (Phase 2); Mobile radio interface; Layer 3 specification (GSM 04.08 version 4.23.1)" EUROPEAN TELECOMMUNICATION STANDARD, Oktober 1999 (1999-10), Seite 68 XP002229438 Sophia Antipolis, France

## Beschreibung

Die Erfindung betrifft ein Verfahren zum vom Benutzer unbemerkten Aktivieren eines Mobiltelefons in einem öffentlichen digitalen Mobilfunknetz.

Bei modernen öffentlichen digitalen zellularen Mobilfunknetzen besteht oftmals ein öffentliches Interesse, festzustellen, ob ein bestimmtes Mobiltelefon, dessen IMSI (International Mobile Subscriber Identity = Internationale Mobilteilnehmer-Kennung) bekannt ist, sich noch im Erfassungsbereich einer bestimmten Basisstation des Netzes befindet, ohne daß diese Feststellung vom Besitzer des Mobiltelefons bemerkt wird. Dieses Interesse besteht vor allem bei einem Verfahren zum Identifizieren des Benutzers eines Mobiltelefons noch nicht vorveröffentlichter älterer Patentanmeldung DE 199 20 222 A1 bei dem durch eine mobile virtuelle Basisstation (VBTS) ein zu identifizierendes Mobiltelefon veranlaßt wird, auf diese mobile virtuelle Basisstation zu wechseln, so daß dann sowohl die IMSI als auch die IMEI (International Mobile Station Equipment Identity = Mobilgeräte-Kennung) dieses Mobiltelefons abgefragt, und so das Mobiltelefon identifiziert werden kann. Anschließend können dann die Gespräche des Benutzers dieses Mobiltelefons abgehört werden. Bei Anwendung dieses bekannten Verfahrens ist es oftmals wünschenswert, festzustellen, ob sich dieses so identifizierte Mobiltelefon noch im Erfassungsbereich der VBTS befindet, ohne daß diese Feststellung vom Benutzer des Mobiltelefons bemerkt wird. Oftmals soll außerdem der Standort solcher Mobiltelefone mit entsprechenden Hochfrequenz-Peilsystemen geortet werden können, wozu das Mobiltelefon zumindest kurzzeitig senden soll, ohne daß dies vom Benutzer bemerkt wird.

Bei einem Mobilkommunikationssystem für sogenannte Pager ist es an sich bekannt, am Pager eine vom Benutzer betätigbare Ausschaltvorrichtung vorzusehen, die verhindert, daß in unerwünschten Situationen, beispielsweise während einer Besprechung, das Rufsignal ertönt. Es ist auch schon bekannt, diese Abschaltung des Ruftons am Pager automatisch auszulösen, indem in bestimmten Räumen zusätzliche Überwachungszellen vorgesehen werden, die bei in der Nähe betriebenen Pagern dem System Zusatzsignale zuführen, die automatisch verhindern, daß bei Empfang eines Rufsignals der Pager aktiviert wird und ein möglicherweise störendes Rufsignal sendet (US-A-6026306). Mit diesem bekannten System könnte das oben erwähnte Problem nicht gelöst werden. Entsprechendes gilt für ein bekanntes System zur Bestimmung der Lage eines Mobiltelefons in einem öffentlichen Mobilfunknetz durch Aussenden eines simulierten Rufsignals (modifizierte SMS-Nachricht), das am Mobiltelefon nicht angezeigt wird und das Mobiltelefon zum Durchführen einer vom Nutzer des Mobiltelefons unbemerkten Positionsbestimmung aufferdert (US-A-6052597).

Es ist Aufgabe der Erfindung, ein Verfahren aufzuzeigen, mit dem von einer Basisstation, beispielsweise einer mobilen, virtuellen Basisstation gemäß dem eingangs erwähnten Identifizierungsverfahren, ein bestimmtes Mobiltelefon zur Aussendung seiner Identifizierungsparameter aktiviert werden kann, ohne daß dies vom Benutzer des Mobiltelefons bemerkt wird.

Diese Aufgabe wird gelöst durch ein Verfahren laut Hauptanspruch. Vorteilhafte Weiterbildungen, insbesondere für die Anwendung im Zusammenhang mit einer VBTS, ergeben sich aus den Unteransprüchen.

Nach dem erfindungsgemäßen Verfahren wird von einer Basisstation aus in bekannter Weise wie bei einem normalen Mobile Terminating Call das zu aktivierende Mobiltelefon über seine bekannte Mobilteilnehmer-Kennung IMSI gerufen und seine Identifizierungsparameter abgefragt, aber nur bis kurz vor Aussendung des im Mobiltelefon ein Klingelsignal auslösenden Setup-Kommandos, d. h., das Setup-Kommando darf nicht mehr von der Basisstation gesendet werden, da das Mobiltelefon sonst nach einem "call confirmed" entweder sofort oder nach Allocation eines geeigneten Kanals mit dem Klingeln beginnen und so den Besitzer des Mobiltelefons darauf aufmerksam machen würde, daß ein unidentifizierter Anruf erfolgt ist. Vor Empfang des Setup-Signals wird die Verbindung zum Mobiltelefon durch Aussenden eines üblichen Channel-Release-Signals wieder abgebaut. Dieses Verfahren ist nicht nur zusammen mit einem Identifizierungsverfahren nach dem eingangs erwähnten Patent bei einer virtuellen Basisstation anwendbar, sondern kann in gleicher Weise von einem Netzwerk-Operator von einer üblichen Basisstation des Netzes aus angewendet werden, um beispielsweise ein Mobiltelefon zu veranlassen, kurzzeitig unbemerkt so lange zu senden, bis sein Standort über ein Peilverfahren ermittelt worden ist. Als besonders vorteilhaft hat es sich jedoch erwiesen, das erfindungsgemäße Verfahren zusammen mit einer virtuellen Basisstation anzuwenden, da es damit möglich ist, daß der Operator der virtuellen Basisstation, der ein bestimmtes Mobiltelefon identifiziert hat und möglicherweise abhören will, jederzeit durch Knopfdruck feststellen kann, ob das von ihm identifizierte Mobiltelefon noch im Erfassungsbereich der virtuellen Basisstation ist oder nicht. Vorzugsweise erfolgt diese Überwachung automatisch und es wird dem Operator automatisch angezeigt, wenn ein zu überwachendes Mobiltelefon sich nicht mehr im Erfassungsbereich der virtuellen Basisstation befindet.

Die Erfindung wird im folgenden anhand schematischer Zeichnungen am Ausführungsbeispiel des bekannten GSM-(Global System for Mobile Communications)-Mobilfunknetzes näher erläutert. In der Zeichnung zeigen:
- Fig. 1: ein Schema zur Erläuterung der Identifizierung eines Mobiltelefons;
- Fig. 2: ein zweites Schema zur Erläuterung der Identifizierung eines Mobiltelefons und
- Fig. 3: ein Ablaufprotokoll eines Mobile Terminating Calls.

Die in der nachfolgenden Beschreibung benutzten Abkürzungen und Begriffe sind genormt (ETR350 GSM01.04) und werden in der entsprechenden Normvorschrift, beispielsweise GSM05.02 näher erläutert. Sie sind außerdem in dem Buch "The GSM System for Mobile Communications" von Michel Mouly und Marie-Bernadette Pautet näher erläutert, die nachfolgend verwendeten Abkürzungen sind außerdem im Index dieses Buches erläutert.

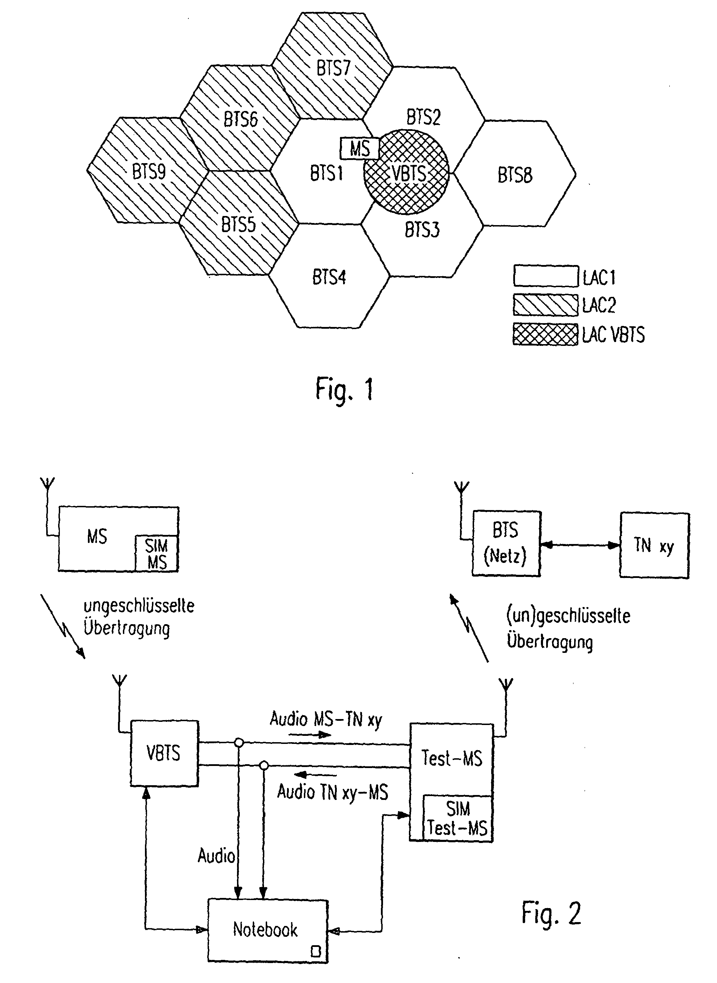

Fig. 1 zeigt schematisch das eingangs erwähnte Verfahren der noch nicht vorveröffentlichter Patentanmeldung DE 199 20 222 A1 zur Identifizierung eines Mobiltelefons MS, da hierfür das erfindungsgemäße Verfahren zur kurzzeitigen Aktivierung dieses Mobiltelefons MS besonders geeignet ist. Zur Identifikation und Abfrage der Identifikationsparameter IMSI und IMEI des Mobiltelefons MS dient eine mobile, virtuelle Basisstation VBTS, die wie eine übliche Netz-Basisstation BTS aufgebaut ist und genauso wie diese betrieben wird. Die VBTS steht in unmittelbarer Verbindung mit einem Test-Mobiltelefon TMS und einem Auswertegerät in Form eines Notebooks, wie dies im Detail in Fig. 2 dargestellt ist. Zur Identifizierung des Mobiltelefons MS wird die VBTS in möglichst räumlicher Nähe des Mobiltelefons MS aufgestellt, so daß bezüglich der VBTS annähernd die gleiche Zellumgebung herrscht wie bei der zu identifizierenden MS. Es sei angenommen, daß das Mobiltelefon MS die Basisstation BTS 1 mit dem momentan höchsten Leistungspegel als Betriebszelle ausgewählt hat. Die MS mißt im Normalfall (eingeschalteter Zustand, eingebucht auf die Betriebszelle und Betrieb im IDLE MODE) nur die Pegel der Nachbarzellen, die ihr von der Betriebszelle BTS1 über die sogenannte BA-Liste (Liste der in der Umgebung der MS betriebenen Basisstationen mit den zugehörigen Kontrollkanälen BCCH) mitgeteilt werden. Damit die MS die zur Identifikation benutzte VBTS wahrnimmt und in ihre Pegelmeßroutine aufnimmt, muß die VBTS eine Kontrollkanalfrequenz BCCH aus dieser BA-Liste der Basisstation BTS 1 abstrahlen.

Dazu muß zunächst eine Zellenabfrage (Cell Monitoring) durchgeführt werden und zwar wie folgt:

Am Standort der VBTS, der möglichst nahe am MS ist, werden die Parameter der Basisstation BTS1 in das Test-Mobiltelefon TMS über eine entsprechende Datenschnittstelle eingelesen und die so empfangene BA-Liste ausgewertet. Aus dieser BA-Liste wird eine der BTS1 benachbarte Basisstation BTSx mit der zugehörigen Kontrollkanalfrequenz BCCH entweder manuell oder automatisch ausgewählt und die Parameter dieser benachbarten Basisstation, beispielsweise BTS2, werden in die VBTS eingelesen und entsprechend modifiziert von dieser abgestrahlt. Durch die Wahl einer benachbarten Zelle BTS2 anstelle von BTS1 wird vermieden, daß laufende Gespräche eventuell abgebrochen werden.

Die am Standort der MS empfangene TX-Leistung der VBTS muß höher als die der Basisstation BTS1 sein, um das Radio-Kriterium C1 für einen Zellenwechsel (Cell-Reselect) zu erfüllen. Dies wird durch entsprechende Senderleistung des VBTS und/oder durch räumliche Nähe der VBTS zur zu identifizierenden MS erreicht.

Wenn diese Radiokriterien erfüllt sind, so kann die MS einen Zellenwechsel auf die VBTS vornehmen.

Im GSM-Netz sind vom Netzbetreiber verschiedene räumlich benachbarte Basisstationen zu sogenannten LAC zusammengefaßt, wie dies für LAC1 und LAC2 in Figur 1 dargestellt ist. Nur wenn ein Wechsel eines Mobiltelefons (im Idle Mode) von LAC1 zu LAC2 erfolgt, ist ein Parameteraustausch zwischen MS und BTS möglich.

Aus diesem Grunde strahlt die VBTS einen von den Zellen in der Nachbarschaft der MS unterschiedlichen LAC ab. Dies wird dadurch erreicht, daß bei der Zellenabfrage mittels des TMS von allen Zellen in der Nachbarschaft der LAC ermittelt wird und dann ein von diesen LAC unterschiedlicher LAC (LAC-VBTS) abgestrahlt wird. Damit wird erreicht, daß mit dem Einbuchen der zu identifizierenden MS bei der VBTS die MS auch tatsächlich ihre relevanten Parameter IMSI und IMEI und dergleichen Kennungen an die VBTS überträgt und in dieser dann entsprechend ausgewertet werden können.

Solange die VBTS abstrahlt und die Radio-Kriterien für die MS erfüllt sind, bleibt die MS auf der VBTS eingebucht und ist damit vom öffentlichen Netz, also der ihr zugehörigen Basisstation BTS1, abgetrennt. Nach Abschluß der Identifikation der MS soll diese aber im Normalfall möglichst sofort wieder auf die BTS1 oder eine andere Basisstation des öffentlichen Netzes zurückkehren, um wieder erreichbar zu sein. Um dies auch ohne Abschalten des Senders VBTS zu erreichen, wird wie folgt vorgegangen:

Bei allen Mobiltelefonen MS des GSM-Systems ist ein sogenannter downlink signaling counter DSC vorgesehen, nach der GSM-Norm 05.08 6.5 muß gesteuert durch diesen DSC die MS eine neue Basisstation auswählen, wenn der DSC den Wert Null erreicht. Der DSC wertet dabei die Daten aus, die im Rufkanal PCH (Paging Channel ) übertragen werden. Wenn die dort übertragenen Daten richtig decodiert werden, erhöht sich der Zählerstand von DSC um 1, wenn die Decodierung jedoch fehlerhaft ist, wird der Zählerstand um 4 erniedrigt.

Dies wird ausgenutzt, um die identifizierte MS wieder in das Netz zurückzuzwingen, indem die VBTS für eine gewisse Zeit auf dem PCH fehlerhafte Daten sendet und so der DSC im MS bis auf Null zurückgestuft wird und dann die MS einen Zellenwechsel durchführen muß, also vom VBTS wieder auf die Netz-Basisstation BTS1 zurückkehrt.

Um einen solchen Zellenwechsel nur für ausgewählte MS zu erzwingen, ist noch Folgendes vorgesehen:

Gewisse MS, von der VBTS bestimmt, sollen auf der VBTS weiter campen, alle anderen MS sollen nach der Abfrage relevanter Parameter durch die VBTS wieder auf die BTS1 oder eine andere BTSx des öffentlichen Netzes zurückkehren. Um die Cell-Reselection der MS im Erfassungsbereich möglichst gezielt einsetzen zu können, muß die Anzahl der Paging Groups maximiert werden. So können ein oder mehrere bestimmte Mobiles auf der VBTS weiterhin campen, während alle anderen eine Cell Reselection auf die BTS in der Umgebung durchführen.

Die Anzahl der Paging Groups kann über die Parameter BS AG BLKS_RES und BS_PA_MFRMS auf dem CCH eingestellt werden. (GSM 05.02) und wird über den BCCH abgestrahlt.

Die Paging Group einer MS wird durch die 3 letzten Ziffern der IMSI (auf der SIM-Karte abgelegt) bestimmt. (GSM 05.02 6.5.2, 6.5.3). Da die VBTS die IMSI der gerade eingebuchten MS kennt, werden nun auf dieser speziellen Paging Group für eine gewisse Zeit fehlerhafte Daten gesendet, die den DSC der MS auf 0 dekrementieren lassen und die MS zu einer Cell Reselection zwingen.

Nach erfolgter Cell Reselection auf eine BTSx des öffentlichen Netzes werden vom MS weiterhin die benachbarten Zellen (über die BA-Liste von BTSx definiert) pegelmäßig ausgewertet. Falls in der BA-Liste von BTSx sich auch der Kanal der VBTS befindet und die VBTS immer noch sendet, so wird die MS für die VBTS wahrscheinlich immer noch das beste Radio-Kriterium errechnen und eine Cell Reselection (frühestens nach 5sec) wieder auf die VBTS machen. Um dieses dauernde Hin und Her zwischen VBTS und BTS und die damit verbundene Signalisierungsbelastung der VBTS zu minimieren, wird die BA-Liste der VBTS modifiziert.

Am Standort der VBTS werden mit dem Zell-Monitor die BA-Listen der Nachbarzellen eingelesen und aus diesen Daten wird eine (oder mehrere) Nachbarzelle(n) ermittelt, deren BA-Liste den Kanal der VBTS nicht enthält. Diese Zelle wird dann in die BA-Liste der VBTS eingetragen und über den BCCH abgestrahlt. Dabei kann es, vor allem in Gebieten mit vielen räumlich kleinen Zellen, Zellen geben, von denen aus die MS erst nach dem Umweg über 2 oder mehr Zellen wieder eine Zelle erreicht, deren BA-Liste den Kanal der VBTS enthält. So können Verweildauern von 1 Min. bis zu unendlich erreicht werden, in denen die MS die VBTS nicht mehr aufsucht.

Mit der Anordnung einer virtuellen Basisstation können auch die abgehenden Gespräche der so identifizierten Mobilstation MS abgehört werden, wie dies Figur 2 zeigt. Es wird wieder von dem ersten Verfahrensschritt ausgegangen, nach welchem die abzuhörende MS auf der virtuellen Basisstation VBTS eingebucht hat, d.h. sie ist in dieser Zeit vom eigentlichen Netz und den Netz-Basisstationen BTS nicht erreichbar und kann auch nicht angerufen werden.

Wenn nach diesem Verfahren die IMSI und IMEI der MS bestimmt ist, werden diese in der VBTS gespeichert.

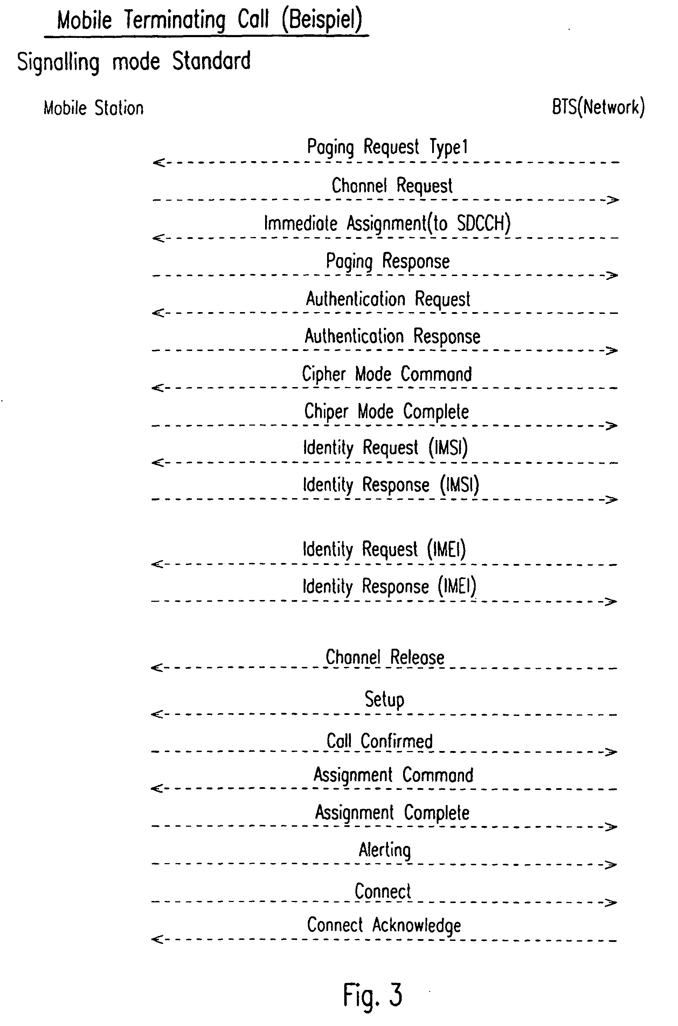

Wenn nun durch den Operator der VBTS festgestellt werden soll, ob das MS noch im Erfassungsbereich der VBTS ist, so wird beispielsweise über einen Betätigungsknopf des Notebooks die VBTS veranlaßt, durch Aussenden der gespeicherten IMSI der MS diese wie bei einem normalen Mobile Terminating Call zu rufen und zu veranlassen, ihre Identitätsparameter (IMSI und IMEI) auszusenden, wie dies in dem Ablaufprotokoll eines normalen Mobile Terminating Calls in Fig. 3 dargestellt ist. In der VBTS ist jedoch eine zusätzliche Einrichtung vorgesehen, die sofort nach Empfang der Aktivitätsparameter alle weiteren Aktivitäten stoppt und verhindert, daß das darauffolgende Setup-Kommando ausgesendet wird. Nach Empfang der IMEI wird sofort und automatisch durch Aussenden eines üblichen Channel-Release-Signals die Verbindung zur MS wieder abgebaut und so verhindert, daß die MS mit dem Klingeln beginnt und dadurch der Benutzer auf eine Abfrage aufmerksam wird.

Diese gemäß der Erfindung mögliche sogenannte Silent-Call-Aktivierung der MS dauert beispielsweise im Standardmode der VBTS nur ca. 4 Sekunden. Diese Zeit reicht oftmals nicht aus, um bestimmte Messungen an den ausgesendeten Identifizierungsparametern der MS durchzuführen, vor allem nicht, um den Standort der MS durch ein Peilsystem zu orten. Um die Sendedauer der MS zu verlängern, können die Identifizierungsparameter IMSI und IMEI auch öfter hintereinander abgefragt werden, da laut der GSM 04.08-Norm (Abschnitt 4.3.3.2) ein Mobiltelefon zu jedem beliebigen Zeitpunkt einer bestehenden Verbindung auf "Identity Requests" antworten muß. Die Anzahl der Wiederholungen und damit die Zeitdauer des unbemerkten Sendens des Mobiltelefons ist vorzugsweise einstellbar.

Die unbemerkte Aktivierung der MS erfolgt vorzugsweise automatisch in vorbestimmten Zeitabständen und der Operator der VBTS wird über eine entsprechende Anzeigeeinrichtung, beispielsweise am Notebook, über den Status dieser laufenden "Silent Calls" informiert. Wenn das Mobiltelefon sich nicht mehr im Erfassungsbereich der VBTS befindet und daher nicht mehr auf einen "Silent Call" antwortet, wird dies beispielsweise durch eine Anzeigeeinrichtung automatisch dem Operator angezeigt, der dann weitere Schritte zur erneuten Identifizierung des Mobiltelefons unternehmen kann.

## Patentansprüche

1. Verfahren zum vom Benutzer unbemerkten Aktivieren eines Mobiltelefons in einem öffentlichen zellularen Mobilfunknetz, bei dem zum Aufbau einer Verbindung von einer Basisstation zu einem Mobiltelefon zunächst von der Basisstation die bekannte Teilnehmer-Kennung (IMSI) des Mobiltelefons gesendet wird und dann die Identifizierungsparameter (IMSI, IMEI) des Mobiltelefons abgefragt werden,
**dadurch gekennzeichnet,**
**daß** zum unbemerkten Aktivieren nach Empfang der Identifizierungsparameter (IMSI, IMEI) in der Basisstation die Aussendung des Setup-Signals unterbunden wird und statt des Setup-Signals ein Channel-Release-Signal von der Basisstation zum Mobiltelefon zwecks Abbau der Verbindung gesendet wird.

2. Verfahren nach Anspruch 1,
**dadurch gekennzeichnet,**
**daß** die für den Anruf erforderliche Teilnehmer-Kennummer (IMSI) durch ein vorhergehendes Verfahren zur Mobiltelefon-Identifizierung mittels einer mobilen, virtuellen Basisstation ermittelt wird, in der virtuellen Basisstation gespeichert wird und dann für die unbemerkte Aktivierung des Mobiltelefons (MS) von der virtuellen Basisstation aus über diese gespeicherte Teilnehmer-Kennummer (IMSI) gerufen wird.

3. Verfahren nach Anspruch 1 oder 2,
**dadurch gekennzeichnet,**
**daß** die Abfrage der Identifizierungsparameter jeweils nur bis zum Empfang der Geräte-Kennung (IMEI) erfolgt.

4. Verfahren nach einem der vorhergehenden Ansprüche,
**dadurch gekennzeichnet,**
**daß** die Abfrage der Identifizierungsparameter jeweils mehrmals hintereinander erfolgt.

5. Verfahren nach einem der vorhergehenden Ansprüche,
**dadurch gekennzeichnet,**
**daß** während der Aussendung der Identifizierungsparameter des Mobiltelefons (MS) dessen Standort mittels eines Peilsystems geortet wird.

6. Verfahren nach einem der vorhergehenden Ansprüche,
**dadurch gekennzeichnet,**
**daß** eine nicht mögliche Aktivierung eines Mobiltelefons (MS) in der Basisstation angezeigt wird.

## Claims

1. Method for the activation of a mobile telephone in a public, cellular mobile-telephone network without notifying the user, wherein, in order to establish a connection from a base station to a mobile telephone, the known subscriber identification (IMSI) of the mobile telephone is initially transmitted by the base station, and the identification parameters (IMSI, IMEI) of the mobile telephone are then requested,
**characterised in that**,
in order to achieve an activation without notifying the user, the transmission of the setup signal is blocked after the identification parameters (IMSI, IMEI) have been received in the base station, and, instead of the setup signal, a channel-release signal is transmitted from the base station to the mobile telephone in order to clear the connection.

2. Method according to claim 1,
**characterised in that**
the subscriber identification (IMSI) required for the call is determined by a preceding method for mobile-telephone identification using a mobile, virtual base station and stored in the virtual base station, and that this stored subscriber identification (IMSI) is then called for the activation of the mobile telephone (MS) from the virtual base station without notifying the user.

3. Method according to claim 1 or 2,
**characterised in that**
the identification parameters are requested in each case only until the device identification (IMEI) is received.

4. Method according to any one of the preceding claims,
**characterised in that**
the identification parameters are requested in each case several times successively.

5. Method according to any one of the preceding claims,
**characterised in that**,
the position of the mobile telephone is located during the transmission of the identification parameters of the mobile telephone (MS) by means of a direction-finding system.

6. Method according to any one of the preceding claims,
**characterised in that**
an inability to activate a mobile telephone (MS) is indicated in the base station.

## Revendications

1. Procédé d'activation d'un téléphone mobile sans intervention de l'utilisateur dans un réseau de radiocommunication cellulaire public avec les mobiles, dans lequel lors de l'établissement d'une liaison d'une station de base vers un téléphone mobile, l'identité d'abonné (identité internationale de station mobile, IISM) connue est dans un premier temps émise par la station de base, puis les paramètres d'identification (identité internationale de station mobile, IISM, et identité internationale d'équipement mobile, IIEM) du téléphone mobile sont interrogés,
**caractérisé en ce que**,
pour une activation non reconnue après la réception des paramètres d'identification (IISM, IIEM) dans la station de base, l'émission du signal d'établissement d'appel est bloquée et au lieu du signal d'établissement d'appel un signal de libération de canal (channel release) est transmis de la station de base vers le téléphone mobile dans le but de couper la liaison.

2. Procédé selon la revendication 1, **caractérisé en ce que** l'identité d'abonné (identification internationale de station mobile, IISM) nécessaire pour l'appel est déterminée par l'intermédiaire d'une station de base virtuelle mobile en utilisant un procédé antérieur permettant l'identification d'un téléphone mobile, est stockée dans la station de base virtuelle et est ensuite appelée à partir de la station de base virtuelle au moyen de cette identité d'abonné (IISM) stockée.

3. Procédé selon la revendication 1 ou 2, **caractérisé en ce que** l'interrogation des paramètres d'identification a lieu respectivement seulement jusqu'à la réception de l'identité des équipements (IIEM).

4. Procédé selon l'une quelconque des revendications précédentes, **caractérisé en ce que** l'interrogation des paramètres d'identification a lieu respectivement plusieurs fois l'une après l'autre.

5. Procédé selon l'une quelconque des revendications précédentes, **caractérisé en ce que**, pendant l'émission des paramètres d'identification du téléphone mobile (SM), sa position est localisée à l'aide d'un système de radiogoniométrie.

6. Procédé selon l'une quelconque des revendications précédentes, **caractérisé en ce qu'**une activation ne pouvant se faire d'un téléphone mobile (SM) dans la station de base est signalée.
